# EUROPEAN PATENT APPLICATION

(11) **EP 1 253 119 A1**
(43) Date of publication of application: **30.10.2002**
(21) Application number: 02076510.3
(22) Date of filing: 16.04.2002
(51) Int. Cl.: C04B 28/02, C04B 14/10

(54) **Method for forming substantially vertical, water-impermeable walls, and stabilized montmorillonite clay for use in the method**

(30) Priority: 17.04.2001 NL 1017858
(71) Applicant: Insulinde Recycling B.V., 1042 AT Amsterdam (NL)
(72) Inventor: Bleeker, Peter Johannes, 1616 RD Hoogkarspel (NL)
(74) Representative: van der Kloet-Dorleijn, Geertruida W.F., Drs.

(57) **Abstract**

The invention relates to a method for forming substantially vertical, water-impermeable walls by in-situ or ex-situ mixing of at least one hydraulic binder, a layered swellable clay and water and allowing the mixture formed in this way to set, in which method the layered, swellable clay used is an optionally modified montmorillonite clay which contains a binding stabilizer. This modified montmorillonite clay preferably also contains sodium carbonate. They hydraulic binder is preferably a fluidized bed ash with puzzolanic properties.

## Description

The invention relates to a method for forming substantially vertical, water-impermeable walls by in-situ or ex-situ mixing of at least one hydraulic binder, a layered swellable, binding stabilizer containing, clay which is modified or not, and water and allowing the mixture formed in this way to set.

A method of this type is known, for example, from EP-A-0 262 302. More particularly, this reference discloses the use of a combination of blast furnace slags, an activator for these slags, and a layered clay such as calcium or sodium montmorillonite clay and sodium carbonate, for the preparation of water-impermeable walls.

A method has now been found by which additional strength will be imparted to the cement framework formed, which strength may be considered similar to that which can be achieved with a conventional reinforcement.

The method of the invention is characterized in that the layered, swellable clay is provided with a weighting agent, preferably in powder form.

It is further observed that a method for forming substantially vertical, water-impermeable walls by in-situ or ex-situ mixing of at least one hydraulic binder, a layered swellable, binding stabilizer containing, clay which is modified or not, and water and allowing the mixture formed in this way to set, is known from EP-B-0522347. More particularly, the mixture used in that document comprises bentonite and ground blast-furnace slags, as well as an activator for the blast-furnace slags. This activator may consist of a cement or an alkaline-earth metal hydroxide, such as Ca(OH)₂, or an alkali metal salt, such as Na₂SO₄. The use of an activator, preferably in a aqueous solution, allows the setting and the development of the desired properties of the walls to be set in a readily controllable manner.

However, when using activators which contain alkaline-earth metal ions, a bentonite which contains a Ca²⁺-chelating agent or a Ca²⁺-precipitating agent is used.

Furthermore, it is stated in EP-B-0522347 that in many cases, in particular given the standard residual moisture content when using the activated Ca bentonite, it is advantageous to obtain the maximum possible expansion of the bentonite by additionally adding chelating agents for Ca²⁺-precipitating agents to the bentonite as early as during processing of the bentonite, in order to trap Ca²⁺ and other polyvalent cations which may pass from the ground blast-furnace slags into bentonite.

It has now been found that the use of Ca²⁺-chelating agents and/or Ca²⁺-precipitating agents, mixed with a clay, can be avoided while nevertheless it is possible to form water-impermeable walls based on a mixture of a hydraulic binder, a layered, swellable clay and water, which walls have desired properties.

According to an expedient embodiment of the present method, the weighting agent consists of enamel grindings.

Although the Applicant does not wish to be tied to any theoretical explanation whatsoever, it is provisionally assumed that the glass phase and metal phase which are present in the enamel grindings are responsible for providing the additional strength.

The enamel grindings used preferably have a relative density of from 4200 to 5800 kg/m³ and/or a particle size of ± 500 µm.

Enamel grindings are a remainder product from iron foundries, are in principle inert and can in this way be utilized to be very good effect. Enamel is fundamentally a glaze which is applied to metal surfaces for protection or ornament. Perhaps on account of the glass phase which is present in this product, the metal phase which is also present can be readily incorporated in the hydraulic binder and can form part of the framework which is to be formed in the presence of water. On account of the metal phase, the relative density of the final set product, obtained from a mixture according to the invention, increases considerably. Moreover, the composition of enamel grindings may vary; enamel grindings known for use as a polishing material usually contain ± 90% of metallic iron and ± 10% of silicates, while enamel grindings which are known for use as a blasting material usually contain ± 25% of metal iron and ± 75% of silicates.

The layered, swellable clay used in the method of the invention is preferably an optionally modified montmorillonite clay which contains a binding stabilizer.

On account of the use of a stabilizer, it is possible to set the desired expansion of the clay material and to retain this expansion during the formation of the walls.

According to the invention, it is preferable for the modified montmorillonite clay used to be calcium or sodium montmorillonite, more particularly sodium bentonite, and for the stabilizer used for the montmorillonite to be an alkali metal carbonate, in particular sodium carbonate (i.e. soda).

In practice , it has been found that if the quantity of stabilizer is 1 to 6, preferably 1 to 4% (w/w), based on the total quantity of hydraulic binder and clay, favourable results are obtained, since within this range the quantity of the water which is still present after the setting process is at its lowest, as explained in more detail below.

According to a preferred embodiment, the hydraulic binder used is a fluidized bed ash with puzzolanic properties which is formed by combustion of coal, which ash has a sulphur content, calculated as CaSO₄, of at least 10%.

It should be noted that it is customary to add calcium sulphate in an amount of approximately 5% to cement compositions, in order to delay the formation of the cement bonds and thereby to prevent rapid setting.

Furthermore, it should be noted that the fluidized bed ash which is formed by combustion, in an electric power station, of coal, has a quartz phase(SiO₂), an anhydrite phase (CaSO₄), a calcium oxide phase (CaO) and a glass phase. However, the anhydrite phase which is formed in the fluidized-bed chamber is formed at a temperature of usually only 750°C to 850°C, namely when the coal is desulphurized in the presence of limestone. In addition to a certain calcium sulphate content, the residual ash formed in the process also includes a relatively large amount of amorphous phase, which is designated CaSiO₃. This amorphous phase is understood as meaning the fraction of the calcium compounds which react with hydrochloric acid but are not present in the form of free CaO or calcite (CaCO₃). It should be noted that in a blast furnace the anhydrite phase is formed at a much higher temperature, namely ± 1400°C.

Surprisingly it has now been found that the said residual ash can be used very effectively for the formation of substantially vertical, water-impermeable walls using a layered, swellable clay.

The Applicant is of the provisional opinion that the binding with the binder according to the invention takes place as a result of the (unslaked) calcium oxide which is present in the fluidized bed ash reacts, with slaking, with the clay minerals which are present and the anhydrite phase (i.e. CaSO₄) from the residual ash, to form the set calcium silicate sulphate phase. Therefore, according to the invention the anhydrite phase is also utilized to good effect.

By contrast, a known binder system, which is based, for example, on fly ash and cement, is based in particular on the formation of calcium silicate hydrates from the clinker minerals (the alite and belite phases) and in part from the glassy/amorphous phases which are present in the fly ash (puzzolanic reaction). However, the lime required for the puzzolanic reaction originates from the cement (lime is released as a reaction product). As has already been state above, the sulphate in the system is used primarily to control the setting time and not to contribute to the strength.

The fluidized bed ash according to the invention preferably has a sulphur content, calculated as CaSO₄, of at least 19%, preferably 25 to 30%.

Large quantities of sulphate of this nature have not proven to constitute any drawback whatsoever in the invention, probably on account of the reaction explained above.

The fluidized bed ash used according to the invention advantageously has a particle size of 0.02 to 0.20 mm, in particular from 0.02 to 0.06 mm.

A particle size of this nature results in sufficient reactivity.

The hydraulic binder according to the invention preferably also contains ground, granulated blast-furnace slags. The quantity of these blast-furnace slags which is to be added can easily be determined empirically and will also be dependent on the strength which is ultimately desired for the end product. The addition of ground, granulated blast-furnace slags means that the quantity of glass phase in the mixture will increase. As is known, calcium hydroxide is an initiator for the glass phase, in this case the blast-furnace slags. As has already been explained above, the calcium hydroxide required originates from the fluidized bed ash.

The quantity of ground, granulated blast-furnace slags which is present is preferably at least 5% by weight, based on the quantity of binder. In practice, the desired quantity will be established empirically, in conjunction with the remaining constituents and quantities thereof in the mixture which is to be set.

When forming the substantially vertical, water-impermeable wall, it is customary, first of all, to form a trench on the site. This trench is filled up with an excavation suspension which is set in situ to form an impermeable medium.

### This suspension can be produced in two ways:

- a.: dry premixing of the ingredients at a central location, after which the suspension is made up on the site by mixing the dry fraction of the desired composition with water.
- b.: wet mixing, with the separate constituents being mixed with water in situ.

The invention also relates to a calcium or sodium montmorillonite clay which contains weighting agent and sodium carbonate and is particularly suitable for use in the method according to the invention. Said weighting agent consists expediently of enamel grindings

The invention is explained in more detail on the basis of the following examples.

### Example I

To increase the stability of the mixture of hydraulic binder according to the invention and the montmorillonite clay, a stabilizer, preferably soda, is added to the clay. To determine the optimum quantity of soda, the following test was carried out.

Four dry mixtures consisting of 40 kg/m³ of bentonite, 125 kg/m³ of fluidized bed ash (binder according to the invention) and 75 kg/m³ of ground, granulated blast-furnace slags were formed. Soda was added to the dry mixtures in an amount of 0, 2, 4 and 6 kg/m³, after which the dry mixtures obtained in this way were suspended in water (1 m³).

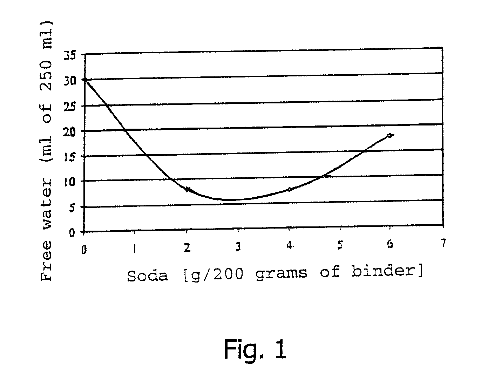

The stability of the suspension, measured as the quantity of free water after 24 hours, was measured for these mixtures. The results are plotted in Fig. 1. As can be seen from Fig. 1, a soda content of 1 to 2% is the optimum quantity for the above composition. It can therefore be seen from Fig. 1 that soda can limit the quantity of free water in a hydraulic binder.

### Example II

The setting behaviour of the hydraulic binder according to the invention, the fluidized bed ash formed by combustion of coal in an electric power station, was determined.

**Table 1**

| Binder composition | Quantity of free water | Measurement result for solid phase |
|---|---|---|
| 50 g of Portland cement 150 g of fluidized bed ash | 0% | soft, but dimensionally stable |
| 80 g of ground granulated blast-furnace slags 80 g of fluidized bed ash 20 g of Portland cement | 5% | sets well |
| 100 g of fly ash 100 g of ground, granulated blast-furnace slags | 15% | sets well |

### Example III

The following mixtures were formed:

**Table 2**

| No. | Sodium bentonite containing 3% of soda (kg/m³) | Binder according to the invention (kg/m³) | Ground, granulated blast-furnace slags (kg/m³) | Portland cement or anhydrite |
|---|---|---|---|---|
| 1 | 40 | 125 | 75 | -- |
| 2 | 40 | 115 | 65 | 20 (Portland cement) |
| 3 | 40 | 115 | 65 | 20 (anhydrite) |
| 4 | 40 | 75 | 125 | -- |
| 5 | 40 | 65 | 115 | 10 (Portland cement) |
| 6 | 40 | 65 | 115 | 10 (anhydrite) |
| 7 | 40 | 150 | 50 | -- |
| 8 | 40 | 50 | 150 | -- |

The quantities to be added are based on metering material to lm³ of water.

The following measurements were carried out on these mixtures:

**Table 3**

| | Liquid phase | Solid phase |
|---|---|---|
| Free water (CUR 189) | XX | XX |
| MF-viscosity (DIN 4126) | XX | |
| Yield stress (DIN 4126) | XX | |
| Filtrate water losses (DIN 4126) | XX | |
| Compressive strength (DIN 18 136) | | XX |
| Modulus of elasticity (DIN 18 136) | | XX |
| Permeability (DIN 18 130) | | XX |

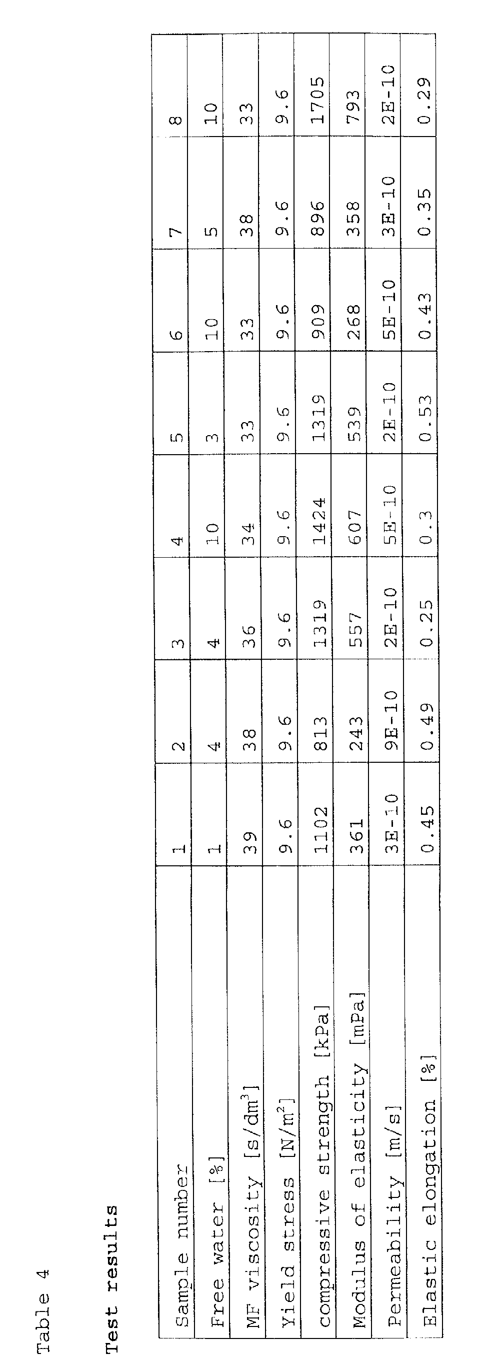

It is noticeable that all the samples satisfy the strength and permeability requirements.

As can be seen from the test results presented in Table 4, all the compositions tested can be used as cement bentonite mixtures, with a slight preference for mixtures No. 1, 5 and 6, on account of the elastic elongation and the permeability.

### Example IV

Starting from a mixture of 40 g of bentonite, 65 g of fluidized bed ash, 115 g of ground, granulated blast-furnace slags and 10 g of anhydrite, test specimens were formed in order to carry out leaching tests. The following results were obtained:

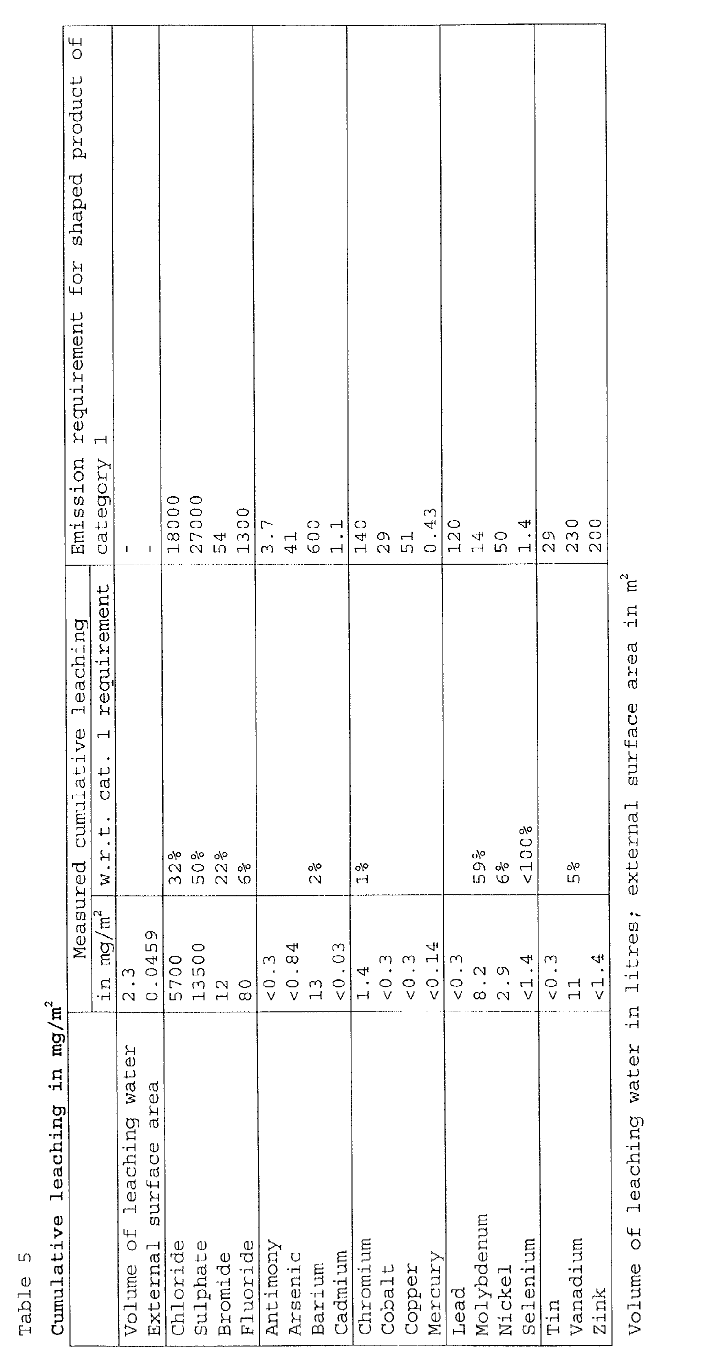

Therefore, for all the parameters tested, i.e. 15 metals and 4 anions, the measured cumulative leaching satisfies the requirements for category 1 shaped construction materials.

### Example V

40 g of sodium bentonite, which had been stabilized with 3% by weight of soda, were added to a dry mixture of 50 g of Portland cement and 150 g of fluidized bed ash. 1180 g of enamel grindings, known as polishing material or as blasting material, were added to the mixture obtained. Polishing material usually has a density of 4200-5800 kg/m³ and a composition of ± 90% of metallic iron and ± 10% of silicates, while blasting material usually has a density of 2600-4500 kg/m³ and a composition of ± 25% of metallic iron and ± 75% of silicates.

After the addition of water, a very hard product was obtained both in the presence of polishing material and in the presence of blasting material.

## Claims

1. Method for forming substantially vertical, water-impermeable walls by in-situ or ex-situ mixing of at least one hydraulic binder, a layered swellable, binding stabilizer containing, clay which is modified or not, and water and allowing the mixture formed in this way to set, **characterized in that** the layered, swellable clay is provided with a weighting agent, preferably in powder form.

2. Method according to claim 1, **characterized in that** the weighting agent consists of enamel grindings.

3. Method according to claim 2, **characterized in that** the enamel grindings have a relative density of 2000 to 6000 kg/m³.

4. Method according to claims 1 to 3, **characterized in that** the hydraulic binder used is a fluidized-bed ash which is formed by combustion of coal and has puzzolanic properties, which ash has a sulphur content, calculated as CaSO₄, of at least 10%.

5. Method according to claim 4, **characterized in that** the fluidized bed ash has a sulphur content, calculated as CaSO₄, of at least 19%, preferably 25 to 30%.

6. Method according to claim 4 or 5, **characterized in that** the fluidized bed ash has a particle size of 0.02 to 0.20 mm, in particular from 0.02 to 0.06 mm.

7. Method according to claims 1 to 6, **characterized in that** the hydraulic binder also includes ground, granulated blast-furnace slags.

8. Method according to claim 7, **characterized in that** the quantity of ground, granulated blast-furnace slags is at least 5% by weight, based on the quantity of binder.

9. Calcium or sodium montmorillonite clay which contains weighting agent and sodium carbonate and is particularly suitable for use in the method according to one of more of claims 1 to 8.

10. Montmorillonite clay according to claim 9, in which the weighting agent consists of enamel grindings.
